# EUROPÄISCHE PATENTSCHRIFT

(11) **EP 3 753 965 B1**
(45) Veröffentlichungstag und Bekanntmachung des Hinweises auf die Patenterteilung: **15.01.2025**
(21) Anmeldenummer: 20174172.5
(22) Anmeldetag: 12.05.2020
(51) Int. Cl.: C08G 63/183, D01F 6/62, D01F 6/84, D02G 3/48, B60C 9/00, C08J 11/04

(54) **FESTIGKEITSTRÄGER UND FESTIGKEITSTRÄGERLAGE FÜR ELASTOMERE ERZEUGNISSE, INSBESONDERE FÜR EINEN FAHRZEUGREIFEN, UND FAHRZEUGREIFEN**
VEHICLE TYRE AND REINFORCING SUPPORT AND REINFORCING SUPPORT BEARING FOR ELASTOMERIC PRODUCTS, IN PARTICULAR FOR A VEHICLE TYRE
SUPPORT DE RÉSISTANCE ET EMPLACEMENT DE SUPPORT DE RÉSISTANCE POUR PRODUITS ÉLASTOMÈRES, EN PARTICULIER POUR UN PNEU DE VÉHICULE, ET PNEU DE VÉHICULE

(30) Priorität: 19.06.2019 DE 102019208988
(43) Veröffentlichungstag der Anmeldung: 23.12.2020
(73) Patentinhaber: Continental Reifen Deutschland GmbH, 30175 Hannover (DE)
(72) Erfinder: Kramer, Thomas, 30419 Hannover (DE); Reese, Wolfgang, 30419 Hannover (DE); Schunack, Michael, 30419 Hannover (DE); Wahl, Günter, 30419 Hannover (DE)
(74) Vertreter: Continental Corporation

(56) Entgegenhaltungen:
- JP-A- 2000 096 370
- JP-A- 2004 263 334

## Beschreibung

Die Erfindung betrifft einen Festigkeitsträger und eine Festigkeitsträgerlage für elastomere Erzeugnisse, insbesondere für einen Fahrzeugreifen.

Ferner betrifft die Erfindung einen Fahrzeugreifen, der zumindest einen erfindungsgemäßen Festigkeitsträger oder zumindest eine erfindungsgemäße Festigkeitsträgerlage aufweist.

Festigkeitsträger für elastomere Erzeugnisse, insbesondere für Festigkeitsträgerlagen von Fahrzeugreifen, wie Karkasslage, Wulstverstärker, Gürtellage und Gürtelbandage, sind dem Fachmann in Aufbau und Material in verschiedensten Ausführungen bekannt. Die Festigkeitsträger werden während der Herstellung in eine Kautschukmischung eingebettet, um als gummierte Festigkeitsträgerlage im elastomeren Erzeugnis eingesetzt werden zu können.

Bisher werden in elastomeren Erzeugnissen, insbesondere in Karkasslagen, Wulstverstärkern, Gürteln oder Gürtelbandagen von Fahrzeugreifen, einerseits stofflich primär (unmittelbar) auf fossilen Rohstoffen - wie Erdöl - basierende textile Festigkeitsträger, wie beispielsweise PET (Polyethylenterephthalat), Aramid und Nylon oder Hybridcorde aus deren Garnen eingesetzt.

Andererseits ist es bekannt, nicht-erdölbasierte textile Festigkeitsträger aus Viskose, wie beispielsweise Rayon oder Lyocell einzusetzen.

Nachteilig an Naturfasern, also an nicht-erdölbasierten Materialien als Material für textile Festigkeitsträger ist, dass diese keine endlose Faserstruktur und eine stark schwankende Faserqualität aufweisen.

Zudem erschwert das fehlende Schrumpfverhalten die spezielle Anwendung von Rayon als Festigkeitsträger in der Gürtelbandage. Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Die Entwicklung geht dahin, umweltfreundliche, ressourcenschonende, auf primäre fossile Rohstoffe verzichtende Elastomerprodukte, wie Fahrzeugreifen, zu entwickeln und einzusetzen, ohne Einbußen in der Haltbarkeit der daraus hergestellten Produkte hinnehmen zu müssen. So sind aus der DE 102010017107 A1 Hybridcorde für z.B. Karkasslagen bekannt, die wenigstens aus einem Garn aus recyceltem PET bestehen.

JP 2004 263334 A offenbart eine Polyester-Kondensation mittels eines Katalysators, der einen Titanverbindung und eine Phosphorverbindung umfasst.

JP 2000 096370 A offenbart eine Polyethylene-Terephthalat-Faser hergestellt durch Kondensation aus A) Isophtalsäure und B) Butylenglykol und/oder Propylenglykol.

Der vorliegenden Erfindung liegt nun die Aufgabe zu Grunde, einen Festigkeitsträger und eine Festigkeitsträgerlage - aufweisend wenigstens einen Festigkeitsträger - für elastomere Erzeugnisse, insbesondere für einen Fahrzeugreifen, bereitzustellen, welche aus umweltfreundlichen und ressourcenschonenden Materialien besteht und gleichzeitig nachhaltig produziert werden kann. Zudem soll der Verstärkungscord eine gleichbleibende Produktqualität aufweisen.

Die Aufgabe wird gelöst, indem der Festigkeitsträger Fasern aus regeneriertem Polyethylenterephthalat (PET) umfasst.

Dadurch, dass der Festigkeitsträger Fasern aus regeneriertem Polyethylenterephthalat (PET) umfasst, werden er sowie die erfindungsgemäße Festigkeitsträgerlage aufweisend wenigstens einen erfindungsgemäßen Festigkeitsträger nachhaltiger produziert, und eine weitere Ansammlung von Abfällen wird durch die Wiederverwendung vermieden. Gleichzeitig weist der Festigkeitsträger mit den Fasern aus regeneriertem Polyethylenterephthalat verbesserte Eigenschaften, insbesondere hinsichtlich der Festigkeit und der Reißeigenschaften, gegenüber einem Festigkeitsträger umfassend Fasern aus recyceltem Polyethylenterephthalat auf, da beim Recycling lediglich ein Umschmelzen stattfindet und hierbei durch den Wärmeeintrag Polymerketten abgebaut werden. Hingegen ist das regenerierte Polyethylenterephthalat (PET) insbesondere durch a) Depolymerisierung von PET-Abfällen zu Monomeren und b) anschließender Polykondensation der Monomere erhalten.

### Vergleich von regeneriertem PET zu recyceltem PET

Das Gewichtsmittel des Molekulargewichts (M_{w}) von recyceltem PET ist somit geringer als das von regeneriertem PET bzw. ist das Gewichtsmittel des Molekulargewichts (M_{w}) von regeneriertem PET größer als das von recyceltem PET.

Als Indikator für das Molekulargewicht kann auch die intrinsische Viskosität (Grenzviskosität) der Materialien angegeben werden. Je höher dieser Wert ist, umso länger sind die Polymerketten und damit umso höher das Gewichtsmittel des Molekulargewichts (M_{w}).

PET für Flaschen weist eine intrinsische Viskosität im Bereich von 0,70 bis 0,85 dL/g auf, während PET für technische Fasern eine intrinsische Viskosität von größer als 0,82 und bis 0,98 dL/g aufweist. Im Falle der technischen Garne wird unmittelbar vor dem Spinnprozess eine Nachkondensation durchgeführt und so die Viskosität weiter erhöht. Sowohl bei der Flaschen- als auch bei der Faserherstellung kommt es durch die Extrusion zu einer Reduktion des Molekulargewichts (Abbau der Polymerketten), wobei aber der höhere Ausgangswert der Polymerketten in den Fasern zu berücksichtigen ist.

Durch den Einsatz von regeneriertem PET, befindet sich die intrinsische Viskosität wieder auf dem Niveau von originärem PET, anders als bei recyceltem Flaschen-PET, welches nicht wieder neu polykondensiert wird.

Bei der Herstellung der erfindungsgemäßen Festigkeitsträger wird regeneriertes PET verwendet, welches eine intrinsische Viskosität von 0,86 bis 0,98 dL/g aufweist.

Die intrinsische Viskosität wird mittels ASTM D4603-18 (Standard Test Method for Determining Inherent Viscosity of Poly(Ethylene Terephthalate) (PET) by Glass Capillary Viscometer) gemessen.

### Vergleich von regeneriertem PET zu originärem PET

Das unmittelbare Ausgangsmaterial für regeneriertes PET ist nicht Erdöl, sondern Flaschen oder andere Artikel aus PET, welche jedoch nicht lediglich umgeschmolzen werden. Aufgrund der a) Depolymerisierung von PET-Abfällen zu Monomeren und b) anschließender Polykondensation der aus a) erhaltenen Monomere weist regeneriertes PET eine andere chemische Zusammensetzung auf als originäres, nicht regeneriertes PET auf unmittelbarer Erdöl-Basis. Dabei weist es insbesondere einen höheren Anteil an Isophthalsäure (m-Phthalsäure) von 0,5 bis 5 Gew.-% (Gewichtsprozent), bevorzugt 0,5 bis 4 Gew.-%, besonders bevorzugt 0,5 bis 3 Gew.-%, wiederum bevorzugt 1 bis 2 Gew.-% auf.

Somit weisen die Fasern aus regeneriertem Polyethylenterephthalat (PET) des erfindungsgemäßen Festigkeitsträgers einen Anteil an Isophthalsäure (m-Phthalsäure) von 0,5 bis 5 Gew.-% (Gewichtsprozent), bevorzugt 0,5 bis 4 Gew.-%, besonders bevorzugt 0,5 bis 3 Gew.-%, wiederum bevorzugt 1 bis 2 Gew.-% auf.

Originäres PET weist dagegen einen Anteil an Isophthalsäure (m-Phthalsäure) von 0 Gew.-% auf, welches für technische Garne, wie Festigkeitsträger in Reifen, üblicherweise verwendet wird.

Der Anteil an Isophthalsäure (m-Phthalsäure) wird mittels dem Fachmann bekannter Verfahren, wie beispielsweise mittels ¹³C-NMR ("nuclear magnetic resonance") bestimmt.

Gemäß vorteilhafter Ausführungsformen umfasst der erfindungsgemäße Festigkeitsträger zu 10 bis 100 Gew.-% an Fasern aus regeneriertem Polyethylenterephthalat (PET), wobei im Fall von weniger als 100 Gew.-% die übrigen Gew.-% dann Fasern aus weiteren Materialien sind.

Bei den Fasern aus weiteren Materialien kann es sich um alle dem Fachmann bekannten Fasern für Festigkeitsträger handeln.

Die Fasern aus weiterem Material sind bevorzugt ausgewählt aus der Gruppe bestehend aus Polyamid- (PA), Aramid-, Polyetherketon- (PEK), Polyketon- (POK), Polyethylennaphthalat- (PEN), Polyethylenfuranoat (PEF), Rayon-, Viskose-, Naturfasern, Glasfasern sowie Fasern aus nicht regeneriertem PET.

Das Polyamid ist bevorzugt ausgewählt aus der Gruppe bestehend aus Polyamid 6 (PA 6), Polyamid 66 (PA 66), Polyamid 12 (PA 12), Polyamid 11 (PA 11), Polyamid 1313 (PA 1313), Polyamid 4 (PA 4), Polyamid 7 (PA 7), Polyamid 8 (PA 8), Polyamid 9 (PA 9), Polyamid 46 (PA 46), Polyamid 610 (PA 610), Polyamid 612 (PA 612), Polyamid 69 (PA 69) und Polyamid 66/6 (PA 66/6).

Bevorzugt ist die Verwendung von PA 6 und/oder PA 66, besonders bevorzugt ist die Verwendung von PA 66 (Nylon).

Im Rahmen der vorliegenden Erfindung stellen Festigkeitsträger linienförmige Gebilde dar, die Fasern umfassen. Als kleinstes linienförmiges Gebilde weist der Festigkeitsträger somit die Fasern auf, welche in Folien nicht enthalten sind.

Die linienförmigen Gebilde können einzeln, miteinander verdreht oder innerhalb eines flächigen Gebildes, insbesondere Gewebes, in der erfindungsgemäßen Festigkeitsträgerlage vorliegen.

Folien sind im Rahmen der vorliegenden Erfindung nicht von dem Begriff "Gewebe" umfasst.

Die Fasern sind gemäß einer bevorzugten Ausführungsform der Erfindung zu Garnen verdreht. Der erfindungsgemäße Festigkeitsträger ist gemäß dieser bevorzugten Ausführungsform somit ein Garn. Ein Garn ist im Rahmen der vorliegenden Erfindung in Anlehnung an die DIN 60900 ein linienförmiges Gebilde, das aus einzelnen Fasern besteht. Einzelne Fasern werden auch als Filamente bezeichnet.

Gemäß einer weiteren bevorzugten Ausführungsform der Erfindung ist der Festigkeitsträger ein Kord. Korde sind im Rahmen der vorliegenden Erfindung linienförmige Gebilde, bei denen ein Garn verdreht ist oder zwei oder mehrere Garne miteinander verdreht sind.

In der Ausführungsform, dass der Festigkeitsträger ein Kord ist, umfasst der Kord somit wenigstens ein Garn, welches Fasern aus regeneriertem Polyethylenterephthalat (PET) umfasst.

Gemäß einer besonders vorteilhaften Ausführungsform der Erfindung umfasst der erfindungsgemäße Festigkeitsträger zu 100 Gew.-% an Fasern aus regeneriertem Polyethylenterephthalat (PET). Hiermit ist der erfindungsgemäße Festigkeitsträger hinsichtlich Nachhaltigkeit und den Verzicht auf originäre Erdöl-basierte Rohstoffe optimiert bei gleichzeitig guter Festigkeit und guten Reißeigenschaften.

Gemäß weiterer vorteilhafter Ausführungsformen der Erfindung umfasst der erfindungsgemäße Festigkeitsträger zu 10 bis 99 Gew.-% an Fasern aus regeneriertem Polyethylenterephthalat (PET), bevorzugt 20 bis 80 Gew.-%.

Hierdurch ist der Festigkeitsträger zum Einen nachhaltig ausgeführt und zum Anderen können aber durch die Verwendung eines oder mehrerer der oben genannten weiteren Materialien weitere für die jeweilige Verwendung angepasste Eigenschaften eingestellt und optimiert werden.

In der erfindungsgemäßen Festigkeitsträgerlage, aufweisend wenigstens einen erfindungsgemäßen Festigkeitsträger sind die Festigkeitsträger insbesondere in eine Gummierungsmischung eingebettet.

Um eine zuverlässige Haftung von den erfindungsgemäßen Festigkeitsträgern zum Gummi zu gewährleisten, ist es zweckmäßig, den erfindungsgemäßen Festigkeitsträger mit einer Haftimprägnierung, z.B. mit einem RFL-Dip im 1- oder 2-Bad-Verfahren, zu versehen. Ferner können dem Fachmann bekannte weitere und übliche Vorbehandlungsverfahren durchgeführt werden, wie insbesondere eine Heißverstreckung der Korde.

Die Erfindung betrifft auch einen Fahrzeugreifen, der zumindest einen erfindungsgemäßen Festigkeitsträger und/oder zumindest eine erfindungsgemäße Festigkeitsträgerlage aufweist.

Bevorzugt weist der Fahrzeugreifen den erfindungsgemäßen Festigkeitsträger und/oder die erfindungsgemäße Festigkeitsträgerlage wenigstens in der Karkasslage und/oder in wenigstens einer Gürtellage und/oder als Wulstverstärker und/oder in der Gürtelbandage auf. Besonders bevorzugt weist der Fahrzeugreifen den erfindungsgemäßen Festigkeitsträger und/oder die erfindungsgemäße Festigkeitsträgerlage wenigstens in der Karkasslage auf.

Der erfindungsgemäße Fahrzeugreifen ist nachhaltig produziert bei gleichen Eigenschaften, insbesondere hinsichtlich der Haltbarkeit und der Fahrstabilität sowie des Rollwiderstandes.

Die Erfindung betrifft auch ein Verfahren zur Herstellung eines Festigkeitsträger verstärkten elastomeren Artikels, insbesondere Fahrzeugreifens, wobei der elastomere Artikel Festigkeitsträger aus PET umfasst.

Das erfindungsgemäße Verfahren ist dadurch gekennzeichnet, dass regeneriertes PET verwendet wird.

Somit ist ein Gegenstand der Erfindung auch die Verwendung von regeneriertem PET zur Herstellung von elastomeren Artikeln, insbesondere Fahrzeugreifen.

Bei dem erfindungsgemäßen Verfahren bzw. der erfindungsgemäßen Verwendung werden a) PET-Abfälle zu Monomeren depolymerisiert und b) anschließender die aus a) erhaltenen Monomere polykondensiert. Das so erhaltene - regenerierte - PET wird in Form von Fasern als Festigkeitsträger verbaut oder zunächst zu Garnen versponnen oder aus den Garnen Korde gedreht. Ferner können die Fasern und/oder Garne und/oder Korde zu einem flächigen Gewebe verwebt sein.

Die genannten Formen des regenerierten PET werden dann beispielsweise beim Reifenaufbauprozess in wenigstens einer Festigkeitsträgerlage mittels dem Fachmann bekannter Verfahren und Vorrichtungen in den Reifenrohling integriert.

## Patentansprüche

1. Festigkeitsträger für elastomere Erzeugnisse, insbesondere für einen Fahrzeugreifen, **dadurch gekennzeichnet, dass**
er Fasern aus regeneriertem Polyethylenterephthalat (PET) umfasst, wobei die Fasern aus regeneriertem Polyethylenterephthalat (PET) einen Anteil an Isophthalsäure (m-Phthalsäure) von 0,5 bis 5 Gew.-% aufweisen,
und wobei bei der Herstellung der Festigkeitsträger regeneriertes PET verwendet, welches eine intrinsische Viskosität von 0,86 bis 0,98 dL/g aufweist, wobei die intrinsische Viskosität mittels ASTM D4603-18 gemessen wird.

2. Festigkeitsträger nach Anspruch 1, **dadurch gekennzeichnet, dass** das regenerierte Polyethylenterephthalat (PET) durch a) Depolymerisierung von PET-Abfällen zu Monomeren und b) anschließender Polykondensation der Monomere erhalten ist.

3. Festigkeitsträger nach einem der vorherigen Ansprüche, **dadurch gekennzeichnet, dass** er zu 10 bis 100 Gew.-% an Fasern aus regeneriertem Polyethylenterephthalat (PET) umfasst.

4. Festigkeitsträger nach einem der Ansprüche 1 bis 3, **dadurch gekennzeichnet, dass** er ein Garn ist.

5. Festigkeitsträger nach einem der Ansprüche 1 bis 3, **dadurch gekennzeichnet, dass** er ein Kord ist.

6. Festigkeitsträgerlage, aufweisend wenigstens einen Festigkeitsträger nach einem der vorherigen Ansprüche.

7. Fahrzeugreifen, **dadurch gekennzeichnet, dass** dieser zumindest einen Festigkeitsträger nach einem der Ansprüche 1 bis 5 und/oder zumindest eine Festigkeitsträgerlage nach Anspruch 6 aufweist.

8. Fahrzeugreifen nach Anspruch 7, **dadurch gekennzeichnet, dass** dieser zumindest einen Festigkeitsträger nach einem der Ansprüche 1 bis 5 und/oder zumindest eine Festigkeitsträgerlage nach Anspruch 6 wenigstens in der Karkasslage und/oder in wenigstens einer Gürtellage und/oder als Wulstverstärker und/oder der Gürtelbandage aufweist.

9. Verfahren zur Herstellung eines Festigkeitsträger verstärkten elastomeren Artikels, insbesondere Fahrzeugreifens, wobei der elastomere Artikel Festigkeitsträger nach einem der Ansprüche 1 bis 5 umfasst.

## Claims

1. Strength member for elastomeric products, in particular for a vehicle tyre,
**characterized in that**
it comprises fibres of regenerated polyethylene terephthalate (PET), wherein the fibres of regenerated polyethylene terephthalate (PET) comprise a proportion of isophthalic acid (m-phthalic acid) of 0.5% to 5% by weight,
and wherein the production of the strength members employs regenerated PET having an intrinsic viscosity of 0.86 to 0.98 dL/g, wherein the intrinsic viscosity is measured by means of ASTM D4603-18.

2. Strength member according to Claim 1, **characterized in that** the regenerated polyethylene terephthalate (PET) is obtained by a) depolymerization of PET wastes to afford monomers and b) subsequent polycondensation of the monomers.

3. Strength member according to any of the preceding claims, **characterized in that** it comprises 10% to 100% by weight of fibres of regenerated polyethylene terephthalate (PET).

4. Strength member according to any of Claims 1 to 3, **characterized in that** it is a yarn.

5. Strength member according to any of Claims 1 to 3, **characterized in that** it is a cord.

6. Strength member ply comprising at least one strength member according to any of the preceding claims.

7. Vehicle tyre, **characterized in that** it comprises at least one strength member according to any of Claims 1 to 5 and/or at least one strength member ply according to Claim 6.

8. Vehicle tyre according to Claim 7, **characterized in that** it comprises at least one strength member according to any of Claims 1 to 5 and/or at least one strength member ply according to Claim 6 at least in the carcass ply and/or in at least one belt ply and/or as a bead reinforcer and/or belt bandage.

9. Process for producing a strength member-reinforced elastomeric article, in particular vehicle tyre, wherein the elastomeric article comprises strength members according to any of Claims 1 to 5.

## Revendications

1. Support de renforcement pour produits élastomères, en particulier pour un pneu de véhicule, **caractérisé**
**en ce qu'**il comprend des fibres en poly(téréphtalate d'éthylène) (PET) régénéré, les fibres en poly(téréphtalate d'éthylène) (PET) régénéré présentant une proportion d'acide isophtalique (acide m-phtalique) de 0,5 à 5% en poids, et, lors de la fabrication du support de renforcement, du PET régénéré étant utilisé qui présente une viscosité intrinsèque de 0,86 à 0,98 dl/g, la viscosité intrinsèque étant mesurée selon la norme ASTM D4603-18.

2. Support de renforcement selon la revendication 1, **caractérisé en ce que** le poly(téréphtalate d'éthylène) (PET) régénéré est obtenu par a) dépolymérisation de déchets de PET en monomères et b) polycondensation consécutive des monomères.

3. Support de renforcement selon l'une des revendications précédentes, **caractérisé en ce qu'**il comprend à raison de 10 à 100% en poids de fibres en poly(téréphtalate d'éthylène) (PET) régénéré.

4. Support de renforcement selon l'une des revendications 1 à 3, **caractérisé en ce qu'**il s'agit d'un fil.

5. Support de renforcement selon l'une des revendications 1 à 3, **caractérisé en ce qu'**il s'agit d'une corde.

6. Couche de support de renforcement présentant au moins un support de renforcement selon l'une des revendications précédentes.

7. Pneu de véhicule, **caractérisé en ce que** celui-ci présente au moins un support de renforcement selon l'une des revendications 1 à 5 et/ou au moins une couche de support de renforcement selon la revendication 6.

8. Pneu de véhicule selon la revendication 7, **caractérisé en ce que** celui-ci présente au moins un support de renforcement selon l'une des revendications 1 à 5 et/ou au moins une couche de support de renforcement selon la revendication 6 au moins dans la couche de carcasse et/ou dans au moins une couche de ceinture et/ou comme renforçateur de talon et/ou dans le bandage de ceinture.

9. Procédé de fabrication d'un support de renforcement d'un article élastomère renforcé, en particulier d'un pneu de véhicule, l'article élastomère comprenant des supports de renforcement selon l'une des revendications 1 à 5.
